# EUROPEAN PATENT APPLICATION

(11) **EP 4 509 230 A1**
(43) Date of publication of application: **19.02.2025**
(21) Application number: 23884257.9
(22) Date of filing: 30.06.2023
(51) Int. Cl.: B06B 1/06

(54) **ULTRASONIC TRANSDUCER, FINGERPRINT RECOGNITION MODULE, AND ELECTRONIC DEVICE**

(30) Priority: 31.10.2022 CN 202211348458
(71) Applicant: Huawei Technologies Co., Ltd., Shenzhen, Guangdong 518129 (CN)
(72) Inventor: CHEN, Xuying, Shenzhen, Guangdong 518129 (CN); YU, Yuanyuan, Shenzhen, Guangdong 518129 (CN); ZHANG, Cuiping, Shenzhen, Guangdong 518129 (CN)
(74) Representative: Pfenning, Meinig & Partner mbB
(86) International application number: PCT/CN2023/104548
(87) International publication number: WO 2024/093318

(57) **Abstract**

An ultrasonic transducer, a fingerprint recognition module, and an electronic device are provided, and belong to the field of ultrasonic detection technologies. The ultrasonic transducer includes a first electrode layer (01), a piezoelectric material layer (02), and a second electrode layer (03) that are sequentially stacked. The first electrode layer (01) includes a plurality of spaced first electrode blocks (011), the second electrode layer (03) includes a plurality of spaced second electrode blocks (031), and orthographic projection of each first electrode block (011) on the second electrode layer (03) overlaps at least one second electrode block (031). The first electrode layer (01) is disposed in a discretized manner, and a thickness of each first electrode block (011) is greater than a thickness threshold, so that a plurality of waveguide structures that can limit propagation paths of ultrasonic waves can be formed at the first electrode layer (01). Therefore, crosstalk between ultrasonic waves reflected from different positions of a detected object can be effectively reduced, thereby ensuring high detection accuracy of the ultrasonic transducer.

## Description

This application claims priority to Chinese Patent Application No. 202211348458.7, filed with the China National Intellectual Property Administration on October 31, 2022 and entitled "ULTRASONIC TRANSDUCER, FINGERPRINT RECOGNITION MODULE, AND ELECTRONIC DEVICE", which is incorporated herein by reference in its entirety.

### TECHNICAL FIELD

This application relates to the field of ultrasonic detection technologies, and in particular, to an ultrasonic transducer, a fingerprint recognition module, and an electronic device.

### BACKGROUND

An ultrasonic transducer is a device that can implement mutual conversion between acoustic energy and electric energy based on piezoelectric effect. The ultrasonic transducer is usually used in fields such as fingerprint recognition, ultrasonic imaging, and flaw detection of an industrial device.

An operating principle of the ultrasonic transducer is as follows: The ultrasonic transducer emits an ultrasonic wave. After the ultrasonic wave is transmitted to a detected object, the detected object reflects the ultrasonic wave to the ultrasonic transducer. Because acoustic impedance in different positions of the detected object is different, signal strength of ultrasonic waves reflected from different positions is different, and the ultrasonic transducer can convert the ultrasonic waves of different strength into electrical signals of different strength. A signal processing circuit (for example, a fingerprint recognition circuit) may further detect the detected object based on the electrical signals of different strength.

However, there is specific crosstalk between the ultrasonic waves reflected from different positions of the detected object, affecting detection accuracy of the ultrasonic transducer.

### SUMMARY

This application provides an ultrasonic transducer, a fingerprint recognition module, and an electronic device are disclosed, to resolve a technical problem that crosstalk between reflected ultrasonic waves affects detection accuracy of the ultrasonic transducer.

According to a first aspect, an ultrasonic transducer is provided. The ultrasonic transducer includes a first electrode layer, a piezoelectric material layer, and a second electrode layer that are sequentially stacked. The first electrode layer includes a plurality of spaced first electrode blocks, and the second electrode layer includes a plurality of spaced second electrode blocks. Orthographic projection of each first electrode block on the second electrode layer overlaps at least one second electrode block, a thickness of each first electrode block is greater than a thickness threshold, and the thickness threshold is positively correlated with a wavelength of an ultrasonic wave emitted by the piezoelectric material layer. For example, the thickness threshold may be equal to 1/8 of the wavelength of the ultrasonic wave emitted by the piezoelectric material layer.

It may be understood that, that the plurality of electrode blocks at the same electrode layer are spaced may mean that there is a gap between any two electrode blocks at the same electrode layer.

It may be further understood that the plurality of first electrode blocks at the first electrode layer may be configured to drive the piezoelectric material layer to emit the ultrasonic wave, and the plurality of second electrode blocks at the second electrode layer may be configured to detect an electrical signal generated by the piezoelectric material layer based on a reflected ultrasonic wave. In addition, when the plurality of first electrode blocks drive the piezoelectric material layer to emit the ultrasonic wave, the plurality of second electrode blocks are all grounded; and when the plurality of second electrode blocks receive the electrical signal, the plurality of first electrode blocks are all grounded. Alternatively, one electrode layer (for example, the second electrode layer) of the first electrode layer and the second electrode layer is configured to: drive the piezoelectric material layer to emit the ultrasonic wave, and detect the electrical signals. The other electrode layer (for example, the first electrode layer) is configured to be grounded.

According to the solution provided in this application, the first electrode layer is disposed in a discretized manner, and the thickness of each first electrode block is greater than the thickness threshold, so that a plurality of waveguide structures that can limit propagation paths of ultrasonic waves can be formed at the first electrode layer. Therefore, crosstalk between ultrasonic waves reflected from different positions of a detected object can be effectively reduced, thereby ensuring high detection accuracy of the ultrasonic transducer.

Optionally, the orthographic projection of each first electrode block on the second electrode layer may overlap one second electrode block. Therefore, it can be ensured that an electrical signal detected by each second electrode block is generated based on a reflected ultrasonic wave transmitted by one first electrode block, thereby effectively reducing the crosstalk between the reflected ultrasonic waves transmitted at the first electrode layer, and ensuring a high signal-to-noise ratio of the electrical signal detected by the second electrode block.

Optionally, the first electrode layer further includes a plurality of first connection structures, and each first connection structure is configured to connect at least two first electrode blocks arranged in a first direction.

The at least two first electrode blocks arranged in the first direction are connected by using the plurality of first connection structures, so that a quantity of leading wires that need to be disposed between the first electrode layer and a drive circuit can be effectively reduced, and wiring complexity can be reduced.

Optionally, the first electrode layer may further include a plurality of second connection structures, and each second connection structure is configured to connect at least two first electrode blocks arranged in a second direction, where the second direction intersects the first direction.

The plurality of second connection structures are disposed, so that the plurality of first electrode blocks can all be interconnected in a staggered manner in both the first direction and the second direction. Therefore, the quantity of leading wires that need to be disposed can be further reduced, and the wiring complexity can be further reduced.

Optionally, each first connection structure is located between two adjacent first electrode blocks; or each first connection structure is located on a side that is of at least two first electrode blocks and that is close to or away from the piezoelectric material layer. In addition, to effectively reduce crosstalk signals propagated in the connection structure, a width of each first connection structure may be less than a width of the first electrode block, and may be as small as possible within a range allowed by a process, for example, may be a minimum width limit of the process.

Optionally, each first electrode block may be a bar-shaped electrode, and orthographic projection of the bar-shaped electrode on the second electrode layer overlaps at least two second electrode blocks.

The bar-shaped first electrode block can effectively isolate some crosstalk signals. In addition, because a manufacturing process of the bar-shaped electrode is simple, complexity and manufacturing costs of the manufacturing process of the ultrasonic transducer can be effectively reduced.

Optionally, the thickness of each first electrode block may be n/4 times the wavelength of the ultrasonic wave emitted by the piezoelectric material layer, and n is a positive integer. For example, the thickness of the first electrode block may be about 50 micrometers (µm). In the solution provided in this application, permitted by a process condition and an overall thickness, the thickness of the first electrode block may be increased. Therefore, convergence effect of the first electrode block on the ultrasonic wave can be effectively increased, and the crosstalk between the ultrasonic waves can be effectively reduced.

Optionally, the ultrasonic transducer may further include a lens layer located on a side that is of the first electrode layer and that is away from the piezoelectric material layer. The lens layer includes a plurality of spaced lenses, and orthographic projection of each lens on the second electrode layer overlaps at least one second electrode block.

Each lens may be configured to focus on the ultrasonic wave emitted by the piezoelectric material layer and the ultrasonic wave reflected by the detected object, thereby effectively reducing the crosstalk between the ultrasonic waves.

Optionally, the orthographic projection of each lens on the second electrode layer overlaps one second electrode block, and orthographic projection of each lens on the first electrode layer overlaps one first electrode block. Therefore, a plurality of waveguide structures that are in one-to-one correspondence with the plurality of second electrodes can be formed at the first electrode layer and the lens layer, so that the crosstalk between the ultrasonic waves can be effectively reduced.

Optionally, if a refractive index of the lens is less than a refractive index of an adjacent layer of the lens, all the plurality of lenses are convex lenses; or if a refractive index of the lens is greater than a refractive index of an adjacent layer of the lens, all the plurality of lenses are concave lenses. In addition, a surface that is of each lens and that is close to the first electrode layer may be a plane, or may be a curved surface.

Optionally, the piezoelectric material layer may include a plurality of spaced piezoelectric blocks; and orthographic projection of each piezoelectric block on the second electrode layer overlaps at least one second electrode block.

The piezoelectric material layer is disposed in a discretized manner, so that the crosstalk of the reflected ultrasonic waves at the piezoelectric material layer can be effectively reduced, thereby effectively improving the signal-to-noise ratio of the electrical signal detected by the second electrode layer.

Optionally, the orthographic projection of each piezoelectric block on the second electrode layer overlaps one second electrode block, and orthographic projection of each piezoelectric block on the first electrode layer overlaps one first electrode block. Based on this, the plurality of waveguide structures that are in one-to-one correspondence with the plurality of second electrodes can be formed at the first electrode layer and the piezoelectric material layer, so that the crosstalk between the ultrasonic waves can be effectively reduced.

Optionally, the ultrasonic transducer may further include a waveguide layer, and the waveguide layer is located on a side that is of the first electrode layer or the second electrode layer and that is away from the piezoelectric material layer; and the waveguide layer includes a plurality of spaced waveguide blocks, and orthographic projection of each waveguide block on the first electrode layer overlaps at least one first electrode block.

A material of the waveguide layer is different from a material of an electrode layer (for example, the first electrode layer or the second electrode layer) adjacent to the waveguide layer. In addition, acoustic impedance of the material of the waveguide layer may be approximate to acoustic impedance of the material of the adjacent electrode layer (for example, an acoustic impedance difference between the two is less than a first threshold), and the material of the waveguide layer has low costs and is easy to process. Therefore, the manufacturing costs and the complexity of the manufacturing process of the ultrasonic transducer can be effectively reduced while a thickness of the waveguide structure is ensured.

Optionally, if the ultrasonic transducer further includes the lens layer, the waveguide layer may be located between the first electrode layer and the lens layer, and a material of the waveguide layer is the same as a material of the lens layer. The material of the lens layer may include a polymer material like resin.

Optionally, a gap between the plurality of first electrode blocks and a gap between the plurality of second electrode blocks may be both vacuum or air. Alternatively, the ultrasonic transducer may further include a filling material filled between the plurality of first electrode blocks and filled between the plurality of second electrode blocks. To ensure a large sound wave reflectivity, a difference between acoustic impedance of the filling material and the acoustic impedance of the material of the waveguide structure (mainly the first electrode block) needs to be as large as possible. For example, a difference between the two is greater than a second threshold.

Optionally, the plurality of second electrode blocks include a plurality of electrode groups arranged in the first direction, and each electrode group includes at least two second electrode blocks arranged in the second direction, where every two adjacent electrode groups are arranged in a staggered manner.

The second electrode blocks are arranged in the staggered manner, so that a density of the second electrode blocks in the ultrasonic transducer can be effectively increased, thereby effectively improving detection precision of the ultrasonic transducer.

According to a second aspect, an ultrasonic transducer is provided. The ultrasonic transducer includes a first electrode layer, a piezoelectric material layer, a second electrode layer, a waveguide layer, and a lens layer. The first electrode layer is of an entire-layer structure, and the second electrode layer includes a plurality of spaced second electrode blocks; the waveguide layer includes a plurality of spaced waveguide blocks, and orthographic projection of each waveguide block on the second electrode layer overlaps at least one second electrode block; and the lens layer includes a plurality of spaced lenses, and orthographic projection of each lens on the second electrode layer overlaps at least one second electrode block.

The first electrode layer, the piezoelectric material layer, and the second electrode layer are sequentially stacked, and the waveguide layer and the lens layer are sequentially stacked on a side that is of the first electrode layer or the second electrode layer and that is away from the piezoelectric material layer. The lens layer and the waveguide layer that are disposed in a discretized manner are used, so that ultrasonic waves reflected from different positions of a detected object can be transmitted to the piezoelectric material layer via different lenses and waveguide blocks. Therefore, crosstalk between the ultrasonic waves reflected from different positions of the detected object can be effectively reduced, thereby ensuring high detection accuracy of the ultrasonic transducer.

It may be understood that the first electrode layer may be configured to drive the piezoelectric material layer to emit an ultrasonic wave, and the plurality of second electrode blocks at the second electrode layer are configured to detect an electrical signal generated by the piezoelectric material layer based on a reflected ultrasonic wave. Alternatively, the second electrode layer is configured to: drive the piezoelectric material layer to emit the ultrasonic wave, and detect the electrical signal. The first electrode layer is configured to be grounded.

Optionally, a thickness of each waveguide block at the waveguide layer may be greater than a thickness threshold, and the thickness threshold is positively correlated with a wavelength of the ultrasonic wave. For example, the thickness threshold may be equal to 1/8 of the wavelength of the ultrasonic wave. For example, the thickness of each waveguide block may be n/4 times the wavelength of the ultrasonic wave, and n is a positive integer. Therefore, convergence effect of the waveguide layer on the ultrasonic wave can be effectively improved, and the crosstalk between the ultrasonic waves can be further reduced.

Optionally, the orthographic projection of each waveguide block on the second electrode layer overlaps one second electrode block, and overlaps orthographic projection of one lens on the second electrode layer.

Optionally, the waveguide layer is located between the first electrode layer and the lens layer, and a material of the waveguide layer is the same as a material of the lens layer.

According to a third aspect, a fingerprint recognition module is provided. The fingerprint recognition module includes a fingerprint recognition circuit and the ultrasonic transducer according to any one of the foregoing aspects. The fingerprint recognition circuit is configured to: provide a drive signal for the ultrasonic transducer, to drive the ultrasonic transducer to emit an ultrasonic wave; and receive an electrical signal generated by the ultrasonic transducer based on a received reflected ultrasonic wave, and perform fingerprint recognition based on the electrical signal.

According to a fourth aspect, an electronic device is provided. The electronic device includes a display and the fingerprint recognition module, located on a side of the display, according to the foregoing aspects.

In conclusion, this application provides an ultrasonic transducer, a fingerprint recognition module, and an electronic device. The ultrasonic transducer includes a first electrode layer, a piezoelectric material layer, and a second electrode layer that are sequentially stacked. The first electrode layer includes a plurality of spaced first electrode blocks, the second electrode layer includes a plurality of spaced second electrode blocks, and orthographic projection of each first electrode block on the second electrode layer overlaps at least one second electrode block. The first electrode layer is disposed in a discretized manner, so that ultrasonic waves reflected from different positions of a detected object can be transmitted to the piezoelectric material layer via different first electrode blocks. Therefore, crosstalk between the ultrasonic waves reflected from different positions of the detected object can be effectively reduced, thereby ensuring high detection accuracy of the ultrasonic transducer.

### BRIEF DESCRIPTION OF DRAWINGS

FIG. 1 is a diagram of a structure of an ultrasonic transducer according to an embodiment of this application;
FIG. 2 is a sectional view of an ultrasonic transducer according to an embodiment of this application;
FIG. 3 is a diagram of a structure of a first electrode layer according to an embodiment of this application;
FIG. 4 is a diagram of a structure of another first electrode layer according to an embodiment of this application;
FIG. 5 is a diagram of a structure of still another first electrode layer according to an embodiment of this application;
FIG. 6 is a diagram of a structure of yet another first electrode layer according to an embodiment of this application;
FIG. 7 is a diagram of a structure of still yet another first electrode layer according to an embodiment of this application;
FIG. 8 is a diagram of a structure of another ultrasonic transducer according to an embodiment of this application;
FIG. 9 is a diagram of a structure of a lens layer according to an embodiment of this application;
FIG. 10 is a diagram of a structure of still another ultrasonic transducer according to an embodiment of this application;
FIG. 11 is a diagram of a structure of yet another ultrasonic transducer according to an embodiment of this application;
FIG. 12 is a diagram of a structure of still yet another ultrasonic transducer according to an embodiment of this application;
FIG. 13 is a diagram of a structure of a further ultrasonic transducer according to an embodiment of this application;
FIG. 14 is a diagram of a structure of a still further ultrasonic transducer according to an embodiment of this application;
FIG. 15 is a diagram of a structure of a yet further ultrasonic transducer according to an embodiment of this application;
FIG. 16 is a diagram of a structure of a second electrode layer according to an embodiment of this application;
FIG. 17 is a diagram of a structure of a still yet further ultrasonic transducer according to an embodiment of this application;
FIG. 18 is a diagram of a structure of a fingerprint recognition module according to an embodiment of this application; and
FIG. 19 is a diagram of a structure of an electronic device according to an embodiment of this application.

### DESCRIPTION OF EMBODIMENTS

The following describes in detail the ultrasonic transducer, the fingerprint recognition module, and the electronic device provided in embodiments of this application with reference to accompanying drawings.

An ultrasonic transducer in the conventional technology usually includes a lower electrode layer, a piezoelectric material layer, and an upper electrode layer that are sequentially stacked. The piezoelectric material layer and the upper electrode layer each are of an entire-layer structure, and the lower electrode layer includes a plurality of mutually independent electrode blocks. The piezoelectric material layer can emit an ultrasonic wave under driving of an electrical signal applied by the upper electrode layer. After the ultrasonic wave is transmitted to a detected object, the ultrasonic wave can be reflected by the detected object to the piezoelectric material layer. The piezoelectric material layer may further convert the reflected ultrasonic wave into an electrical signal. Because strength of ultrasonic waves reflected from different positions of the detected object may be different, strength of electrical signals generated in different positions of the piezoelectric material layer is also different. Correspondingly, the strength of the electrical signals may be detected via the plurality of mutually independent electrode blocks at the lower electrode layer, to implement detection on the detected object. However, there may be interference between the ultrasonic waves reflected from different positions of the detected object. Therefore, accuracy of ultrasonic detection is low.

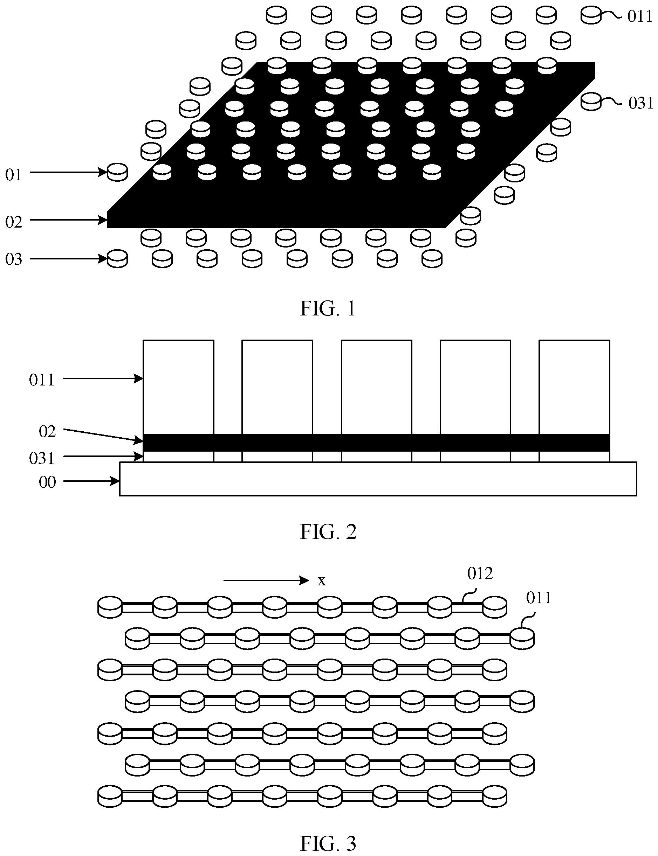

FIG. 1 is a diagram of a structure of an ultrasonic transducer according to an embodiment of this application. The ultrasonic transducer can effectively reduce crosstalk between reflected ultrasonic waves, and ensure high detection accuracy. As shown in FIG. 1, the ultrasonic transducer includes a first electrode layer 01, a piezoelectric material layer 02, and a second electrode layer 03 that are sequentially stacked.

The first electrode layer 01 includes a plurality of spaced first electrode blocks 011, that is, there is a gap between any two first electrode blocks 011. In addition, a thickness of each first electrode block 011 is greater than a thickness threshold, and the thickness threshold is positively correlated with a wavelength of an ultrasonic wave emitted by the piezoelectric material layer 02. For example, the thickness threshold may be 1/8 of the wavelength of the ultrasonic wave. The first electrode layer 01 may also be referred to as an upper electrode layer.

The second electrode layer 03 includes a plurality of spaced second electrode blocks 031, that is, there is a gap between any two second electrode blocks 031. In addition, the second electrode layer 03 may also be referred to as a lower electrode layer or a pixel electrode layer.

FIG. 2 is a sectional view of the ultrasonic transducer according to an embodiment of this application. As shown in FIG. 2, orthographic projection of each first electrode block 011 on the second electrode layer 03 overlaps at least one second electrode block 031. In other words, there is an overlapping area between the orthographic projection of each first electrode block 011 and an area in which the at least one second electrode block 031 is located. There may be the following several cases in which there is an overlapping area between orthographic projection and an area in which an electrode block is located: The orthographic projection completely coincides with the area in which the electrode block is located, the orthographic projection covers the area in which the electrode block is located, the orthographic projection is located in the area in which the electrode block is located, and the orthographic projection partially overlaps the area in which the electrode block is located.

In a possible example, the plurality of first electrode blocks 011 at the first electrode layer 01 are configured to drive the piezoelectric material layer 02 to emit the ultrasonic wave, and the plurality of second electrode blocks 031 at the second electrode layer 03 are configured to detect an electrical signal generated by the piezoelectric material layer 02 based on a reflected ultrasonic wave. In addition, when the plurality of first electrode blocks 011 drive the piezoelectric material layer 02 to emit the ultrasonic wave, the plurality of second electrode blocks 031 may all be grounded; and when the plurality of second electrode blocks 031 receive the electrical signal, the plurality of first electrode blocks 011 may all be grounded.

In another possible example, in the first electrode layer 01 and the second electrode layer 03, one electrode layer (for example, the second electrode layer 03) is configured to: drive the piezoelectric material layer 02 to emit the ultrasonic wave, and detect the electrical signal generated based on the reflected ultrasonic wave; and the other electrode layer (for example, the first electrode layer 01) is configured to be grounded.

The reflected ultrasonic wave may be reflected by a detected object (for example, a finger of a user). In addition, because signal strength of ultrasonic waves reflected from different positions of the detected object may be different, strength of electrical signals detected by different electrode blocks (for example, the plurality of second electrode blocks 031) may also be different.

It may be understood that the first electrode layer 01 includes the plurality of spaced first electrode blocks 011, that is, the first electrode layer 01 is disposed in a discretized manner, and the thickness of each first electrode block 011 is greater than the thickness threshold (1/8 of the wavelength of the ultrasonic wave), so that a plurality of waveguide structures that can limit propagation paths of emitted ultrasonic waves and reflected ultrasonic waves can be formed at the first electrode layer 01. Therefore, crosstalk between the ultrasonic waves reflected from different positions of the detected object can be effectively reduced.

It may be further understood that the wavelength of the ultrasonic wave emitted by the piezoelectric material layer 02 may be a wavelength of an ultrasonic wave emitted by the piezoelectric material layer 02 when the ultrasonic transducer operates at a resonance frequency. If the ultrasonic transducer has a plurality of different modes and has different resonance frequencies in different modes, test simulation may be performed on detection effect (for example, receiving sensitivity) of the ultrasonic transducer on reflected ultrasonic waves at different resonance frequencies. Then, the thickness of the first electrode block 011 may be determined based on a wavelength corresponding to a resonance frequency with optimal detection effect. In other words, the wavelength of the ultrasonic wave emitted by the piezoelectric material layer 02 may be the wavelength corresponding to the resonance frequency with the optimal detection effect.

In conclusion, this embodiment of this application provides an ultrasonic transducer. A first electrode layer in the ultrasonic transducer includes a plurality of spaced first electrode blocks, a second electrode layer includes a plurality of spaced second electrode blocks, and orthographic projection of each first electrode block on the second electrode layer overlaps at least one second electrode block. The first electrode layer is disposed in a discretized manner, and a thickness of each first electrode block is greater than a thickness threshold, so that a plurality of waveguide structures that can limit propagation paths of ultrasonic waves can be formed at the first electrode layer. Therefore, crosstalk between ultrasonic waves reflected from different positions of a detected object can be effectively reduced, and a signal-to-noise ratio of the ultrasonic transducer can be further improved, thereby ensuring high detection accuracy of the ultrasonic transducer.

In this embodiment of this application, materials of both the first electrode layer 01 and the second electrode layer 03 may be conductive materials, and the materials of the two electrode layers may be the same or may be different. The conductive material may include a metal material and/or a conductive polymer material. The metal material may include at least one of aluminum (Al), gold (Au), silver (Ag), platinum (Pt), copper (Cu), molybdenum (Mo), titanium (Ti), and the like. The conductive polymer material may include indium tin oxide (indium tin oxide, ITO) and the like.

A material of the piezoelectric material layer 02 may be an organic polymer material, a piezoelectric ceramic material, an inorganic piezoelectric material, or the like. The organic polymer material may include at least one of the following materials: polyvinylidene difluoride (polyvinylidene difluoride, PVDF), a copolymer of PVDF (PVDF-TRFE), a blend of PVDF (for example, PVDF-graphene), and the like. The piezoelectric ceramic material may include at least one of the following materials: lead zirconate titanate piezoelectric ceramics (lead zirconate titanate piezoelectric ceramics, PZT), an alloy material of PZT, potassium-sodium niobate ceramics (KNN, for example, KxNa1-xNbO3), ferroelectric lead magnesium niobate-lead titanate (PMN-PT), and the like. The alloy material of PZT may include lead lanthanum zirconate titanate (PLZT), lead niobate zirconate titanate (PNZT), and the like. The inorganic piezoelectric material may include at least one of the following materials: aluminum nitride (AlN) and an alloy material thereof, zinc oxide (ZnO) and an alloy material thereof, and the like. The alloy material of AlN may include scandium-doped aluminum nitride (ScxAl1-xN) and the like, and the alloy material of ZnO may include vanadium-doped zinc oxide (VxZn1-xO) and the like.

Optionally, as shown in FIG. 2, the orthographic projection of each first electrode block 011 on the second electrode layer 03 may overlap one second electrode block 031. For example, the plurality of first electrode blocks 011 included in the first electrode layer 01 may be in one-to-one correspondence with the plurality of second electrode blocks 031 included in the second electrode layer 03, and the orthographic projection of each first electrode block 011 overlaps one corresponding second electrode block 031. Based on this, it can be ensured that an electrical signal detected by each second electrode block 031 is generated based on a reflected ultrasonic wave transmitted by one first electrode block 011, thereby effectively reducing the crosstalk between the ultrasonic waves transmitted at the first electrode layer 01, and ensuring a high signal-to-noise ratio of the electrical signal detected by the second electrode block 031.

Each first electrode block 011, one second electrode block 031 corresponding to the first electrode block 011, and a piezoelectric material between the two may also be referred to as one ultrasonic transducer unit. Correspondingly, the ultrasonic transducer may be an ultrasonic transducer array including a plurality of ultrasonic transducer units.

It may be understood that each second electrode block 031 at the second electrode layer 03 may alternatively correspond to at least two first electrode blocks 011. In other words, orthographic projection of the at least two first electrode blocks 011 may overlap a same second electrode block 031.

Each first electrode block 011 at the first electrode layer 01 and each second electrode block 031 at the second electrode layer 03 may be in a shape of a cylinder, a prism, or the like. The prism may be a cuboid, a cube, or the like. In addition, the first electrode block 011 and the second electrode block 031 may be in a same shape or different shapes. This is not limited in embodiments of this application.

FIG. 3 is a diagram of a structure of the first electrode layer according to an embodiment of this application. As shown in FIG. 3, the first electrode layer 01 may further include a plurality of first connection structures 012, and each first connection structure 012 is configured to connect at least two first electrode blocks 011 arranged in a first direction.

It may be understood that the first electrode layer 01 further needs to be connected to a drive circuit through a leading wire, and may drive, based on a drive signal provided by the drive circuit, the piezoelectric material layer 02 to emit the ultrasonic wave. After the first electrode layer 01 is disposed in a discretized manner, a quantity of leading wires and wiring complexity are greatly increased. However, in this embodiment of this application, because the at least two first electrode blocks 011 arranged in the first direction may be connected by using the plurality of first connection structures 012, the quantity of leading wires can be effectively reduced, and the wiring complexity can be reduced.

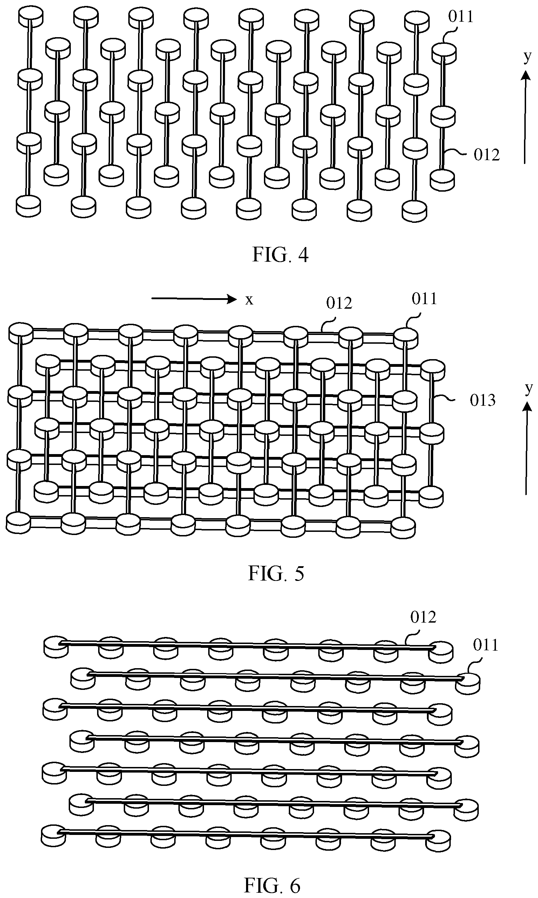

In this embodiment of this application, the plurality of second electrode blocks 031 at the second electrode layer 03 may be arranged in an array, and each second electrode block 031 may be referred to as one pixel electrode. Correspondingly, as shown in FIG. 3, the first direction may be a pixel electrode row direction x, that is, the at least two first electrode blocks 011 arranged in the row direction x at the first electrode layer 01 are interconnected by using the first connection structure 012. Alternatively, as shown in FIG. 4, the first direction may be a pixel electrode column direction y, that is, the at least two first electrode blocks 011 arranged in the column direction y at the first electrode layer 01 are interconnected by using the first connection structure 012.

Optionally, as shown in FIG. 5, the first electrode layer 01 may further include a plurality of second connection structures 013, and each second connection structure 013 is configured to connect at least two first electrode blocks 011 arranged in a second direction. The second direction intersects the first direction. For example, the second direction is perpendicular to the first direction. In the example shown in FIG. 5, the first direction is the pixel electrode row direction x, and the second direction is the column direction y.

The plurality of second connection structures 013 are disposed, so that the plurality of first electrode blocks 011 can be interconnected in a staggered manner in the first direction and the second direction. Therefore, the quantity of leading wires that need to be disposed can be further reduced, and the wiring complexity can be further reduced.

Optionally, as shown in FIG. 3 to FIG. 5, each first connection structure 012 may be located between two adjacent first electrode blocks 011. Alternatively, as shown in FIG. 6, each first connection structure 012 may be located on a side that is of at least two first electrode blocks 011 and that is close to or away from the piezoelectric material layer 02. In FIG. 6, an example in which the first connection structure 012 is located on a side that is of the first electrode block 011 and that is away from the piezoelectric material layer 02 is used for description.

It may be understood that, if the first electrode layer 01 further includes the plurality of second connection structures 013, the second connection structure 013 may also be located between two adjacent first electrode blocks 011, or may be located on a side that is of at least two first electrode blocks 011 and that is close to or away from the piezoelectric material layer 02.

In this embodiment of this application, thicknesses of the connection structures (for example, the first connection structure 012 and the second connection structure 013) may be less than or equal to the thickness of the first electrode block 011. In addition, to effectively reduce crosstalk signals propagated in the connection structure, a width of the connection structure may be less than a width of the first electrode block 011, and may be as small as possible within a range allowed by a process. For example, the width of the connection structure may be a minimum width limit of the process. A width direction of the connection structure and the first electrode block 011 is perpendicular to a thickness direction of the first electrode layer 01, and is perpendicular to an arrangement direction of the at least two first electrode blocks 011 connected to the connection structure. The thickness direction is a stacking direction of the first electrode layer 01, the piezoelectric material layer 02, and the second electrode layer 03.

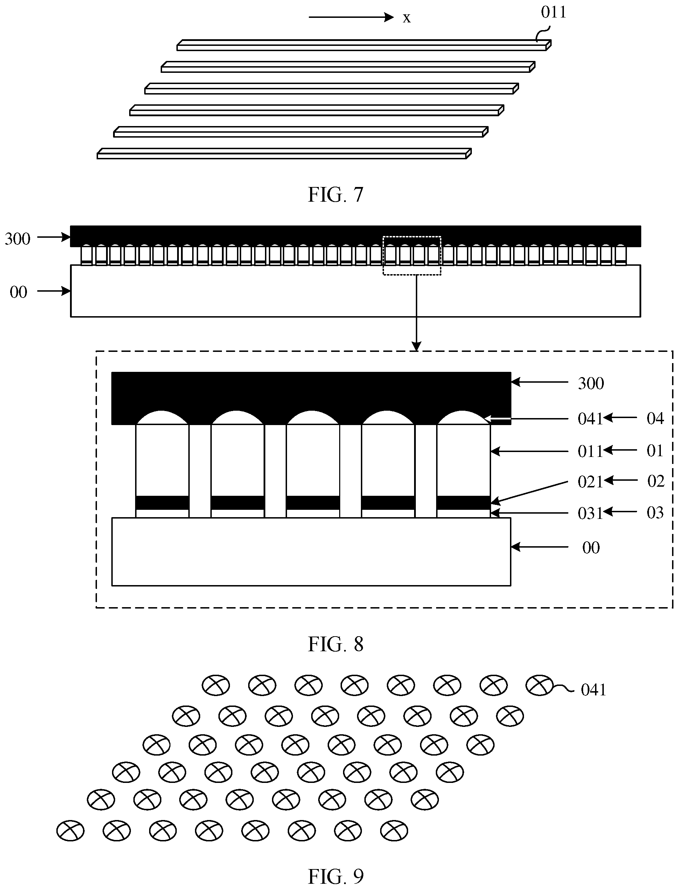

The foregoing descriptions are provided by using an example in which each first electrode block 011 is a block-shaped electrode. Optionally, as shown in FIG. 7, each first electrode block 011 may alternatively be a bar-shaped electrode, and orthographic projection of the bar-shaped electrode on the second electrode layer 03 overlaps at least two second electrode blocks 031.

In a possible example, the first electrode blocks 011 may extend in a first direction, and the first electrode blocks 011 may be arranged in a second direction. Correspondingly, orthographic projection of each bar-shaped electrode on the second electrode layer 03 may overlap a plurality of second electrode block 031 arranged in the first direction. As shown in FIG. 7, the first direction may be the row direction x, or may be the column direction y.

In another possible example, the plurality of first electrode blocks 011 may be grouped into two groups. In the first group, the first electrode blocks 011 extend in a first direction, and the first electrode blocks 011 are arranged in the second direction. In the second group, the first electrode blocks 011 extend in a second direction, and the first electrode blocks 011 are arranged in the first direction. Correspondingly, orthographic projection of each bar-shaped electrode in the first group may overlap the second electrode blocks 031 arranged in the first direction, and orthographic projection of each bar-shaped electrode in the second group may overlap the second electrode blocks 031 arranged in the second direction. The first direction intersects the second direction. For example, the first direction may be the row direction x, and the second direction may be the column direction y.

The bar-shaped first electrode block 011 can effectively isolate some crosstalk signals. In addition, because a manufacturing process of the bar-shaped electrode is simple, complexity and manufacturing costs of a manufacturing process of the ultrasonic transducer can be effectively reduced.

Optionally, the thickness of each first electrode block 011 at the first electrode layer 01 may be n/4 times the wavelength of the ultrasonic wave emitted by the piezoelectric material layer 02, and n is a positive integer. For example, n may be an odd number. For example, the thickness of the first electrode block 011 may be about 50 µm. In the solution provided in this embodiment of this application, permitted by a process condition and an overall thickness, the thickness of the first electrode block 011 may be increased. Therefore, convergence effect of the first electrode block 011 on the ultrasonic wave can be effectively increased, and the crosstalk between the ultrasonic waves can be effectively reduced.

It may be understood that n/4 times the wavelength of the ultrasonic wave in this embodiment of this application may be obtained by modifying n/4 times a theoretical wavelength of the ultrasonic wave based on non-ideality during ultrasonic wave transmission, for example, by modifying n/4 times the theoretical wavelength based on a simulation result, so as to determine the thickness of the first electrode block 011. An error exists between a correction result and n/4 times the theoretical wavelength, and the error is less than a preset threshold. For example, assuming that n=1, and 1/4 times the theoretical wavelength is 60 µm, the thickness of the first electrode block 011 determined after 1/4 times the theoretical wavelength is modified may be 50 µm.

FIG. 8 is a diagram of a structure of another ultrasonic transducer according to an embodiment of this application. As shown in FIG. 8, the ultrasonic transducer may further include a lens layer 04 located on a side that is of the first electrode layer 01 and that is away from the piezoelectric material layer 02. As shown in FIG. 8 and FIG. 9, the lens layer 04 includes a plurality of spaced lenses 041, that is, there is a gap between any two lenses 041. Orthographic projection of each lens 041 on the second electrode layer 03 overlaps at least one second electrode block 031.

Each lens 041 may be configured to focus on the ultrasonic wave emitted by the piezoelectric material layer 02 and the ultrasonic wave reflected by the detected object, thereby effectively reducing the crosstalk between the ultrasonic waves, improving sensitivity of detecting the reflected ultrasonic wave, and increasing a penetration capability of the ultrasonic wave. In a preparation process of the ultrasonic transducer, a physical focus of the lens 041 may be changed by adjusting a geometric form and/or a material of the lens 041, so that the physical focus is located on a surface in contact with the detected object. It is assumed that the ultrasonic transducer is used in a fingerprint recognition module, and the physical focus may be located on a surface of a penetrating medium of the fingerprint recognition module, where the penetrating medium is a medium used to be in contact with a finger of a user. It may be understood that a curvature of the lens 041 can be adjusted by adjusting the geometric form of the lens 041, and a refractive index of the lens 041 can be adjusted by adjusting the material of the lens 041.

It may be further understood that the plurality of lenses 041 included in the lens layer 04 may be in one-to-one correspondence with the plurality of second electrode blocks 031 at the second electrode layer 03, and orthographic projection of each lens 041 overlaps one corresponding second electrode block 031. Alternatively, each lens 041 at the lens layer 04 may correspond to at least two second electrode blocks 031 at the second electrode layer 03, and the orthographic projection of each lens 041 overlaps the at least two corresponding second electrode blocks 031. Alternatively, each second electrode block 031 at the second electrode layer 03 may correspond to at least two lenses 041. In other words, orthographic projection of the at least two lenses 041 may overlap a same second electrode block 031.

Optionally, as shown in FIG. 8, the orthographic projection of each lens 041 on the second electrode layer 03 overlaps one second electrode block 031, and orthographic projection of each lens 041 on the first electrode layer 01 overlaps one first electrode block 011. In other words, the plurality of lenses 041, the plurality of first electrode blocks 011, and the plurality of second electrode blocks 031 may be in one-to-one correspondence. Based on this, a plurality of waveguide structures that are in one-to-one correspondence with the plurality of second electrodes 031 can be formed at the first electrode layer 01 and the lens layer 04, so that the crosstalk between the ultrasonic waves can be effectively reduced.

Optionally, as shown in FIG. 8, a coupling medium 300 (which may also be referred to as a functional layer) may be further disposed on a side that is of the lens layer 04 and that is away from the first electrode layer 01. The coupling medium 300 may have at least one of the following functions: acoustic impedance matching, electromagnetic shielding, stress isolation, gluing, and the like. In addition, the coupling medium 300 may be of a single-layer or multi-layer structure.

If the coupling medium 300 has an acoustic impedance matching function, a material of the coupling medium 300 may be determined based on acoustic impedance of a material of an adjacent layer. The adjacent layer of the coupling medium 300 may include a lens layer 04, and may further include a penetrating medium. The penetrating medium may be a medium used to be in contact with the detected object, and a material of the penetrating medium may be metal, glass, or the like. If the coupling medium 300 has an electromagnetic shielding function, a material of the coupling medium 300 may include a metal material, for example, may include a copper foil. If the coupling medium 300 has a stress isolation function, a material of the coupling medium 300 may include a soft material, for example, a colloidal material. If the coupling medium 300 has a gluing function, a material of the coupling medium 300 may include a gluing material.

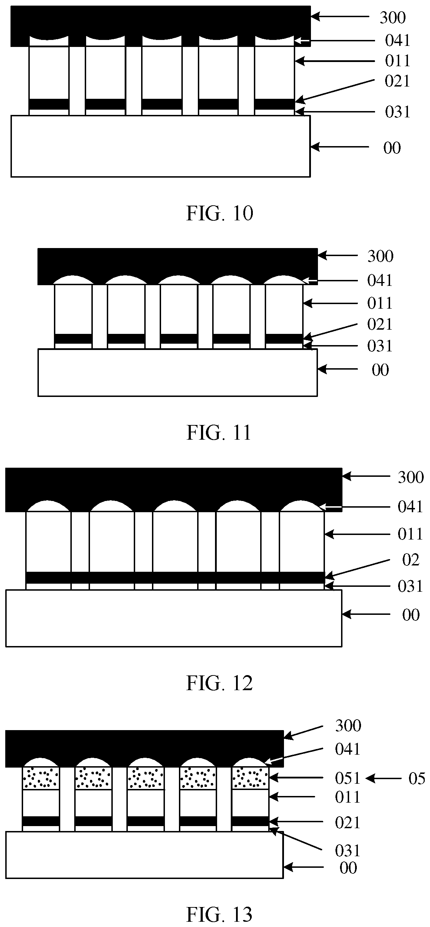

It may be understood that a shape of the lens 041 may be determined based on a value relationship between a refractive index of the lens 041 and a refractive index of an adjacent layer. For example, if the refractive index of the lens 041 is less than refractive indexes of adjacent layers (the first electrode layer 01 and the coupling medium 300) of the lens 041, as shown in FIG. 8, the shape of the lens 041 may be a convex lens. If the refractive index of the lens 041 is greater than refractive indexes of adjacent layers (the first electrode layer 01 and the coupling medium 300) of the lens 041, as shown in FIG. 10, the shape of the lens 041 may be a concave lens.

As shown in FIG. 8 and FIG. 10, a surface that is of the lens 041 and that is close to the first electrode layer 01 may be a plane, so that it can be ensured that a manufacturing process is simple. Alternatively, a surface that is of the lens 041 and that is close to the first electrode layer 01 may be a curved surface. In other words, the convex lens may be a double-sided convex lens, and the concave lens may be a double-sided concave lens.

It may be further understood that, as shown in FIG. 8 and FIG. 10, a width of a cross section of each lens 041 may be equal to a width of a cross section of the first electrode block 011. Alternatively, as shown in FIG. 11, a width of a cross section of each lens 041 may be slightly greater than a width of a cross section of the first electrode block 011. The width of the cross section of the lens 041 is not limited in embodiments of this application, provided that it is ensured that the orthographic projection of the lens 041 overlaps the corresponding first electrode block 011 and the corresponding second electrode block 031.

Optionally, as shown in FIG. 12, the piezoelectric material layer 02 in the ultrasonic transducer may be of an entire-layer structure. Alternatively, refer to FIG. 8 to FIG. 11. The piezoelectric material layer 02 may include a plurality of spaced piezoelectric blocks 021, that is, there is a gap between any two piezoelectric blocks 021. Orthographic projection of each piezoelectric block 021 on the second electrode layer 03 overlaps at least one second electrode block 031.

It may be understood that the plurality of piezoelectric blocks 021 included in the piezoelectric material layer 02 may be in one-to-one correspondence with the plurality of second electrode blocks 031 at the second electrode layer 03, and the orthographic projection of each piezoelectric block 021 overlaps one corresponding second electrode block 031. Alternatively, each piezoelectric block 021 may correspond to at least two second electrode blocks 031, and the orthographic projection of each piezoelectric block 021 overlaps the at least two corresponding second electrode blocks 031. Alternatively, each second electrode block 031 may correspond to at least two piezoelectric blocks 021, that is, orthographic projection of the at least two piezoelectric blocks 021 may overlap a same second electrode block 031.

Optionally, as shown in FIG. 8, FIG. 10, and FIG. 11, the orthographic projection of each piezoelectric block 021 on the second electrode layer 03 overlaps one second electrode block 031, and orthographic projection of each piezoelectric block 021 on the first electrode layer 01 overlaps one first electrode block 011. In other words, the plurality of piezoelectric blocks 021, the plurality of first electrode blocks 011, and the plurality of second electrode blocks 031 may be in one-to-one correspondence. Based on this, a plurality of waveguide structures that are in one-to-one correspondence with the plurality of second electrodes 031 can be formed at the first electrode layer 01 and the piezoelectric material layer 02, so that the crosstalk between the ultrasonic waves can be effectively reduced.

In this embodiment of this application, a thickness of the piezoelectric material layer 02 may be determined based on the resonance frequency of the ultrasonic transducer. For example, it is assumed that the ultrasonic transducer is used in a fingerprint recognition module, and to ensure a longitudinal resolution of fingerprint recognition, the resonance frequency of the ultrasonic transducer is about 8 megahertz (MHz) to 20 MHz. Correspondingly, the thickness of the piezoelectric material layer 02 may be several micrometers to dozens of micrometers.

FIG. 13 is a diagram of a structure of a further ultrasonic transducer according to an embodiment of this application. As shown in FIG. 13, the ultrasonic transducer may further include a waveguide layer 05 located on the side that is of the first electrode layer 01 and that is away from the piezoelectric material layer 03. The waveguide layer 05 may include a plurality of spaced waveguide blocks 051, that is, there is a gap between any two waveguide blocks 051. Orthographic projection of each waveguide block 051 on the first electrode layer 01 may overlap at least one first electrode block 011.

The plurality of waveguide blocks 051 included in the waveguide layer 05 may be in one-to-one correspondence with the plurality of first electrode blocks 011 at the first electrode layer 01, and the orthographic projection of each waveguide block 051 overlaps one corresponding first electrode block 011. Alternatively, each waveguide block 051 may correspond to at least two first electrode blocks 011 at the first electrode layer 01, and the orthographic projection of each waveguide block 051 overlaps the at least two corresponding first electrode blocks 011. Alternatively, each first electrode block 011 may correspond to at least two waveguide blocks 051. In other words, orthographic projection of the at least two waveguide blocks 051 may both overlap a same first electrode block 011.

Optionally, as shown in FIG. 13, orthographic projection of each waveguide block 051 on the second electrode layer 03 overlaps one second electrode block 031, and the orthographic projection of each waveguide block 051 on the first electrode layer 01 overlaps one first electrode block 011. In other words, the plurality of waveguide blocks 051, the plurality of first electrode blocks 011, and the plurality of second electrode blocks 031 may be in one-to-one correspondence. Based on this, a plurality of waveguide structures that are in one-to-one correspondence with the plurality of second electrodes 031 can be formed at the waveguide layer 05 and the first electrode layer 01, so that the crosstalk between the ultrasonic waves can be effectively reduced.

It may be understood that a material of the waveguide layer 05 may be different from a material of the first electrode layer 01, and acoustic impedance of the material of the waveguide layer 05 may be similar to acoustic impedance of the material of the first electrode layer 01 (for example, an acoustic impedance difference between the two is less than a first threshold), to avoid reflection of the ultrasonic wave on an interface between the waveguide layer 05 and the first electrode layer 01. In this embodiment of this application, a material that has low costs and is easy to process may be alternatively selected as the material of the waveguide layer 05. Therefore, the manufacturing costs and the complexity of the manufacturing process of the ultrasonic transducer can be effectively reduced while a specific thickness of the waveguide structure is ensured.

It may be further understood that, as shown in FIG. 13, in a scenario in which the ultrasonic transducer further includes the lens layer 04, the waveguide layer 05 may be located between the lens layer 04 and the first electrode layer 01.

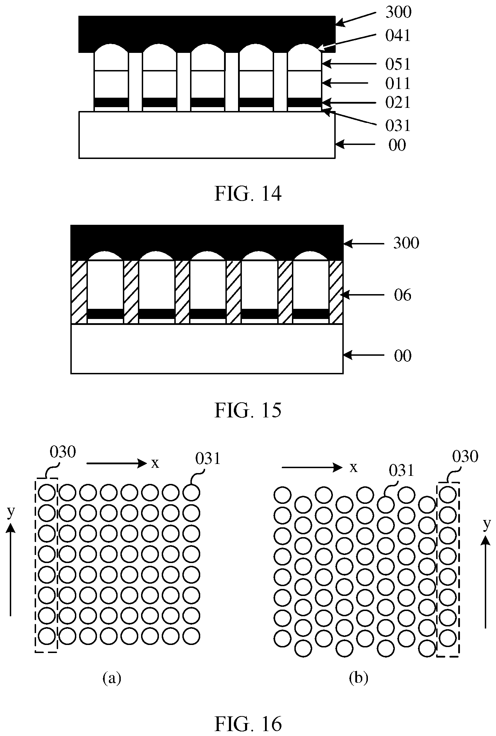

Optionally, as shown in FIG. 14, the material of the waveguide layer 05 may be the same as a material of the lens layer 04, and the material of the lens layer 04 may be a polymer material like resin. In addition, the plurality of waveguide blocks 051 included in the waveguide layer 05 may be in one-to-one correspondence with the plurality of lenses 041 at the lens layer 04, and orthographic projection of each waveguide block 051 on the lens layer 04 overlaps one corresponding lens 041. Because the material of the waveguide layer 05 is the same as the material of the lens layer 04, each waveguide block 051 and a lens 041 corresponding to the waveguide block 051 may be of an integrated structure.

In this embodiment of this application, as shown in FIG. 8 and FIG. 10 to FIG. 14, the gap between the plurality of first electrode blocks 011 and the gap between the plurality of second electrode blocks 031 may be both vacuum or air. Alternatively, as shown in FIG. 15, the ultrasonic transducer may further include a filling material 06 filled between the plurality of first electrode blocks 011 and filled between the plurality of second electrode blocks 031.

It may be understood that if the piezoelectric material layer 03, the lens layer 04, and/or the waveguide layer 05 in the ultrasonic transducer are/is also of discretized structures/a discretized structure, a gap between the discretized structures may also be vacuum, air, or the filling material 06.

If the gap between the discretized structures is vacuum, because acoustic impedance of the vacuum is almost 0, it can be ensured that an acoustic reflectivity of an interface between the waveguide structure and the vacuum is large, and propagation effect of the ultrasonic wave is good. Each waveguide structure may include at least one first electrode block 011. Alternatively, in addition to the first electrode block 011, at least one of the piezoelectric block 021, the waveguide block 051, and the lens 041 may be included.

In this embodiment of this application, the filling material 06 may be a polymer material, and a difference between acoustic impedance of the filling material 06 and acoustic impedance of a material (mainly a material of the first electrode block 011) of the waveguide structure may be as large as possible (for example, a difference between the two is greater than a second threshold), to ensure that an interface between the two has a large acoustic reflectivity. For example, the polymer material may be a gluing material like adhesive that penetrates from the coupling medium 300 into the gap when the coupling medium 300 is prepared.

FIG. 16 is a diagram of a structure of the second electrode layer according to an embodiment of this application. As shown in FIG. 16, the plurality of second electrode blocks 031 included in the second electrode layer 03 may be grouped into a plurality of electrode groups 030 arranged in the first direction, and each electrode group 030 includes at least two second electrode blocks 031 arranged in the second direction.

The first direction intersects the second direction. For example, in the example shown in FIG. 16, the first direction is the row direction x, and the second direction is the column direction y. Certainly, the first direction may alternatively be the column direction y, and the second direction may be the row direction x.

Optionally, as shown in (a) in FIG. 16, every two adjacent electrode groups 030 are arranged in an aligned manner. Alternatively, as shown in (b) in FIG. 16, every two adjacent electrode groups 030 are arranged in a staggered manner. The second electrode blocks 031 are arranged in the staggered manner, so that a density of the second electrode blocks 031 in the ultrasonic transducer can be effectively increased, thereby effectively improving detection precision of the ultrasonic transducer.

If the ultrasonic transducer is used in a fingerprint recognition module, the plurality of second electrode blocks 031 at the second electrode layer 03 may implement pixelized receiving of echo signals of valleys and ridges of a fingerprint. To ensure a fingerprint recognition resolution, a distance between centers of two adjacent second electrode blocks 031 is usually less than 100 µm. In addition, the second electrode layer 03 is thin. For example, a thickness of the second electrode layer 03 may be at a nanometer level, to reduce impact on flatness of the piezoelectric material layer 02 deposited on a surface of the second electrode layer 03.

It may be understood that, if the plurality of waveguide structures in the ultrasonic transducer are in one-to-one correspondence with the plurality of second electrode blocks 031 included in the second electrode layer 03, the plurality of waveguide structures may alternatively be arranged in the staggered manner in the manner shown in (b) in FIG. 16.

Optionally, as shown in FIG. 8 and FIG. 10 to FIG. 15, the ultrasonic transducer may further include a substrate 00 located on a side that is of the second electrode layer 03 and that is away from the piezoelectric material layer 02. The substrate 00 may include a base plate and a circuit layer located on the base plate. A material of the base plate may be glass or silicon. The circuit layer may include a thin film transistor (thin film transistor, TFT) circuit, or may include a complementary metal-oxide-semiconductor (complementary metal-oxide-semiconductor, CMOS) circuit. In addition, the circuit layer is connected to the second electrode layer 03, and is configured to perform related processing on the electrical signals detected by the second electrode blocks 031 at the second electrode layer 03.

It may be further understood that the waveguide layer 05 may be further located on the side that is of the second electrode layer 03 and that is away from the piezoelectric material layer 03. In addition, the coupling medium 300 is formed on a side that is of the waveguide layer 05 and that is away from the second electrode layer 03, that is, the waveguide layer 05 may be coupled to the penetrating medium through the coupling medium 300. If the ultrasonic transducer further includes the lens layer 04, the lens layer 04 may be located on the side that is of the waveguide layer 05 and that is away from the second electrode layer 03.

In conclusion, this embodiment of this application provides an ultrasonic transducer. A first electrode layer in the ultrasonic transducer includes a plurality of spaced first electrode blocks, a second electrode layer includes a plurality of spaced second electrode blocks, and orthographic projection of each first electrode block on the second electrode layer overlaps at least one second electrode block. The first electrode layer is disposed in a discretized manner, and a thickness of each first electrode block is greater than a thickness threshold, so that a plurality of waveguide structures that can limit propagation paths of ultrasonic waves can be formed at the first electrode layer. Therefore, crosstalk between ultrasonic waves reflected from different positions of a detected object can be effectively reduced, thereby ensuring high detection accuracy of the ultrasonic transducer. In addition, because the ultrasonic transducer can reuse the first electrode layer to implement a waveguide function, processing costs and complexity are greatly reduced, and this helps reduce an overall thickness of the ultrasonic transducer.

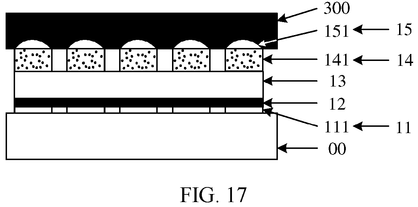

An embodiment of this application further provides another ultrasonic transducer. As shown in FIG. 17, the ultrasonic transducer includes a second electrode layer 11, a piezoelectric material layer 12, a first electrode layer 13, a waveguide layer 14, and a lens layer 15. The second electrode layer 11, the piezoelectric material layer 12, and the first electrode layer 13 are sequentially stacked, and the waveguide layer 14 and the lens layer 15 are sequentially stacked on a side that is of the second electrode layer 11 or the first electrode layer 13 and that is away from the piezoelectric material layer 12.

The first electrode layer 13 may be of an entire-layer structure, that is, the first electrode layer 13 may be a sheet-shaped electrode, and the first electrode layer 13 may also be referred to as an upper electrode layer.

The second electrode layer 11 includes a plurality of spaced second electrode block 111, and the second electrode layer 11 may also be referred to as a lower electrode layer or a pixel electrode layer.

The waveguide layer 14 includes a plurality of spaced waveguide blocks 141, and orthographic projection of each waveguide block 141 on the second electrode layer 11 overlaps at least one second electrode block 111.

The lens layer 15 includes a plurality of spaced lenses 151, and orthographic projection of each lens 151 on the second electrode layer 11 also overlaps at least one second electrode block 111.

The first electrode layer 13 may be configured to drive the piezoelectric material layer 12 to emit an ultrasonic wave, and the plurality of second electrode blocks 111 at the second electrode layer 11 may be configured to detect an electrical signal generated by the piezoelectric material layer 12 based on a reflected ultrasonic wave. Alternatively, the plurality of second electrode blocks 111 at the second electrode layer 11 are configured to: drive the piezoelectric material layer 12 to emit the ultrasonic wave, and detect the electrical signal. The first electrode layer 13 is configured to be grounded.

It may be understood that the plurality of waveguide blocks 141 included in the waveguide layer 14 may be in one-to-one correspondence with the plurality of second electrode blocks 111 at the second electrode layer 11, and orthographic projection of each waveguide block 141 overlaps one corresponding second electrode block 111. Alternatively, each waveguide block 141 may correspond to at least two second electrode blocks 111, and the orthographic projection of each waveguide block 141 overlaps the at least two corresponding second electrode blocks 111. Alternatively, each second electrode block 111 may correspond to at least two waveguide blocks 141. In other words, orthographic projection of the at least two waveguide blocks 141 may both overlap a same second electrode block 111.

Similarly, the plurality of lenses 151 included in the lens layer 15 may be in one-to-one correspondence with the plurality of second electrode blocks 111 at the second electrode layer 03, and orthographic projection of each lens 151 overlaps one corresponding second electrode block 111. Alternatively, each lens 151 may correspond to at least two second electrode blocks 111, and the orthographic projection of each lens 151 overlaps the at least two corresponding second electrode blocks 111. Alternatively, each second electrode block 111 may correspond to at least two lenses 151. In other words, orthographic projection of the at least two lenses 151 may both overlap a same second electrode block 111.

It may be further understood that a material of the waveguide layer 14 may be different from a material of an adjacent electrode layer (for example, the first electrode layer 13 or the second electrode layer 11), and acoustic impedance of the material of the waveguide layer 14 may be similar to acoustic impedance of the material of the adjacent electrode layer, to avoid reflection of the ultrasonic wave on an interface between the waveguide layer 14 and the electrode layer. In this embodiment of this application, a material that has low costs and is easy to process may be alternatively selected as the material of the waveguide layer 14, so that manufacturing costs and complexity of a manufacturing process of the ultrasonic transducer can be effectively reduced.

For example, the waveguide layer 14 may be located between the first electrode layer 13 and the lens layer 15, the material of the waveguide layer 14 may be the same as a material of the lens layer 15, and the material of the lens layer 15 may be a polymer material like resin.

Optionally, a thickness of each waveguide block 141 at the waveguide layer 14 may be greater than a thickness threshold, and the thickness threshold is positively correlated with a wavelength of the ultrasonic wave. For example, the thickness threshold may be equal to 1/8 of the wavelength of the ultrasonic wave. For example, the thickness of each waveguide block 141 may be n/4 times the wavelength of the ultrasonic wave, and n is a positive integer. Therefore, it can be ensured that convergence effect of the waveguide layer 14 on the ultrasonic wave is good, and crosstalk between the ultrasonic waves can be effectively reduced. The wavelength of the ultrasonic wave may be a wavelength of an ultrasonic wave emitted by the piezoelectric material layer 12 when the ultrasonic transducer operates at a resonance frequency. If the ultrasonic transducer has a plurality of different resonance frequencies, the wavelength of the ultrasonic wave may be a wavelength corresponding to a resonance frequency when detection effect of the ultrasonic transducer on the reflected ultrasonic wave is optimal.

Optionally, as shown in FIG. 17, the orthographic projection of each waveguide block 141 on the second electrode layer 11 may overlap one second electrode block 111, and overlap orthographic projection of one lens 151 on the second electrode layer 11. In other words, the plurality of lenses 151 and the plurality of waveguide blocks 141 may be in one-to-one correspondence with the plurality of second electrode blocks 111. Based on this, a plurality of waveguide structures that are in one-to-one correspondence with the plurality of second electrodes 111 can be formed at the waveguide layer 14 and the lens layer 15, so that the crosstalk between the ultrasonic waves can be effectively reduced. Each waveguide structure includes one waveguide block 141 and one lens 151.

As shown in FIG. 17, the ultrasonic transducer may further include a substrate 00 located on the side that is of the second electrode layer 11 and that is away from the piezoelectric material layer 12. The substrate 00 may include a base plate and a circuit layer located on the base plate. A material of the base plate may be a glass material or a silicon material. The circuit layer may be a TFT circuit or a CMOS circuit. In addition, the circuit layer is connected to the second electrode layer 11, and is configured to perform related processing on the electrical signals detected by the second electrode blocks 111 at the second electrode layer 11.

It may be understood that for structures of the second electrode layer 11, the waveguide layer 14, and the lens layer 15, refer to the related descriptions in the foregoing embodiments. Details are not described herein again.

It may be further understood that, during preparation of the ultrasonic transducer provided in this embodiment of this application, in a possible example, film layers may be sequentially formed on the substrate 00, for example, the second electrode layer, the piezoelectric material layer, the first electrode layer, the waveguide layer, and the lens layer may be sequentially formed.

In another possible example, the second electrode layer, the piezoelectric material layer, and the first electrode layer may be sequentially formed on one side of the substrate 00, and the other side of the substrate 00 is etched to form the waveguide layer. Correspondingly, the waveguide layer may be located on the side that is of the second electrode layer and that is away from the piezoelectric material layer. Then, after the substrate 00 on which the film layers are formed is rotated by 180°, the lens layer is formed on a surface of the substrate 00 (namely, a surface of the waveguide layer).

In conclusion, this embodiment of this application provides an ultrasonic transducer. A lens layer in the ultrasonic transducer includes a plurality of spaced lenses, a waveguide layer includes a plurality of spaced waveguide blocks, and orthographic projection of each lens and each waveguide block on the second electrode layer both overlaps at least one second electrode block. The lens layer and the waveguide layer disposed in a discretized manner are used, so that a plurality of waveguide structures that can limit propagation paths of ultrasonic waves can be formed at the lens layer and the waveguide layer. Therefore, crosstalk between ultrasonic waves reflected from different positions of a detected object can be effectively reduced, thereby ensuring high detection accuracy of the ultrasonic transducer.

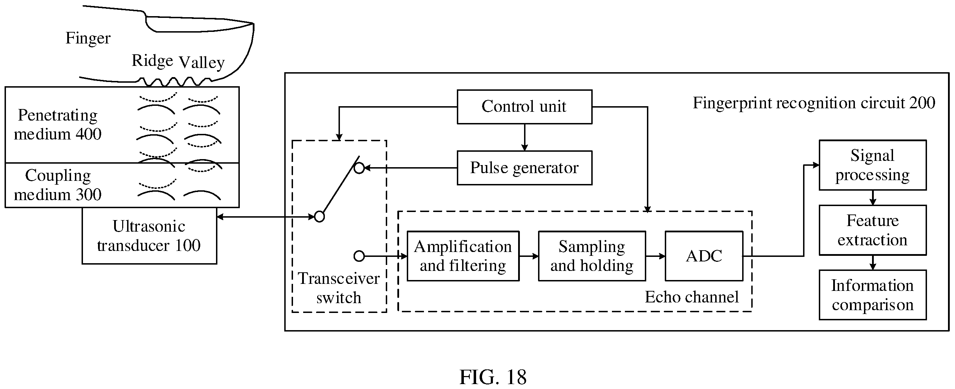

An embodiment of this application provides a fingerprint recognition module. As shown in FIG. 18, the fingerprint recognition module includes the ultrasonic transducer 100 provided in the foregoing embodiments and a fingerprint recognition circuit 200. The fingerprint recognition circuit 200 is configured to: provide a drive signal for the ultrasonic transducer 100, to drive the ultrasonic transducer 100 to emit an ultrasonic wave; and receive an electrical signal generated by the ultrasonic transducer 100 based on a received reflected ultrasonic wave, and perform fingerprint recognition based on the electrical signal.

Optionally, as shown in FIG. 18, a control unit in the fingerprint recognition circuit 200 can control a pulse generator to generate an excitation voltage signal, and the excitation voltage signal can be transmitted to the ultrasonic transducer 100 (for example, can be transmitted to a first electrode layer) via a transceiver switch, to drive the ultrasonic transducer 100 to transmit the ultrasonic wave. After the ultrasonic wave passes through a coupling medium 300 and a penetrating medium 400 and arrives at a surface of a finger, valleys and ridges on the surface of the finger respectively generate echo reflected signals of different strength. The echo reflected signals are received by the ultrasonic transducer 100 and converted into electrical signals after passing through the penetrating medium 400 and the coupling medium 300.

The electrical signals can be transmitted to an echo channel of the fingerprint recognition circuit 200 via the transceiver switch. The echo channel sequentially performs amplification and filtering, sampling and holding, and analog-to-digital conversion (analog-to-digital convert, ADC) processing on the electrical signals, and then converts the electrical signals into digital signals. Then, the fingerprint recognition circuit 200 can sequentially perform digital signal processing and feature extraction on the digital signals, and compare an extracted feature with pre-stored fingerprint information, to implement fingerprint recognition.

Optionally, the fingerprint recognition circuit 200 may be a circuit independent of the ultrasonic transducer 100, for example, may be an independent fingerprint recognition chip. Alternatively, some or all circuits in the fingerprint recognition circuit 200 may be integrated into a substrate 00 of the ultrasonic transducer 100. In other words, a circuit layer in the substrate 00 may implement some or all functions of the fingerprint recognition circuit 200.

In conclusion, this embodiment of this application provides a fingerprint recognition module. An ultrasonic transducer in the fingerprint recognition module has a waveguide structure, and the waveguide structure can effectively reduce crosstalk between echo signals, and improve a signal-to-noise ratio of the echo signal. Therefore, it can be ensured that the fingerprint recognition module has high detection sensitivity and high detection accuracy.

An embodiment of this application further provides an electronic device. The electronic device may include a display and the fingerprint recognition module, located on a side of the display, provided in the foregoing embodiments. The fingerprint recognition module may be located on a non-display side of the display, that is, the electronic device may implement in-display fingerprint recognition of a full-view display. The display may also be referred to as a display module, and may be an organic light-emitting diode (organic light-emitting diode, OLED) display, a liquid crystal display (liquid crystal display, LCD), or the like.

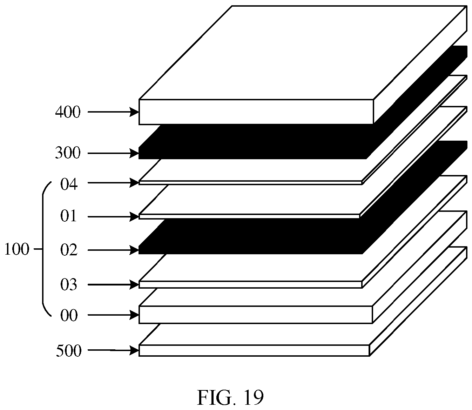

For example, as shown in FIG. 18 and FIG. 19, if a device in which the fingerprint recognition module is used is an electronic device having a display, a penetrating medium 400 in the device is the display, and the display 400 may be coupled to the ultrasonic transducer 100 provided in the foregoing embodiments via a coupling medium 300. The ultrasonic transducer 100 may also be referred to as an acoustic stack.

It may be understood that the fingerprint recognition module provided in embodiments of this application may be further used in another device, for example, may be used in an access control device. Correspondingly, the penetrating medium 400 may be a glass medium, a metal medium, or the like.

It may be further understood that the ultrasonic transducer provided in embodiments of this application may be further used in another field other than fingerprint recognition, for example, may be further used in a field like ultrasonic imaging or industrial flaw detection.

Optionally, as shown in FIG. 19, a device in which the ultrasonic transducer 100 is used may further include a functional layer 500, and the functional layer 500 is located on a side that is of a substrate 00 and that is away from a second electrode layer 03. The functional layer 500 may have at least one of the following functions: acoustic reflection, acoustic absorption, mechanical support, and the like, and the functional layer 500 may be of a single-layer or multi-layer structure. If the functional layer 500 has an acoustic reflection or acoustic absorption function, a material of the functional layer 500 may include a polymer material, a porous material, and the like. If the functional layer 500 has a mechanical support function, a material of the functional layer 500 may include a metal material, for example, a steel sheet.

In embodiments of this application, terms "first", "second", and "third" are merely used for description, but shall not be understood as an indication or implication of relative importance. A term "at least one" means one or more, and "a plurality of" means two or more. For example, the at least one second electrode block refers to one second electrode block or a plurality of second electrode blocks.

A term "and/or" in this application describes only an association relationship between associated objects and indicates that three relationships may exist. For example, A and/or B may indicate the following three cases: Only A exists, both A and B exist, and only B exists. In addition, a character "/" in this specification usually indicates an "or" relationship between the associated objects.

The foregoing descriptions are merely optional embodiments of this application, but are not intended to limit this application. Any modification, equivalent replacement, improvement, or the like made within the concept and principle of this application shall fall within the protection scope of this application.

## Claims

1. An ultrasonic transducer, wherein the ultrasonic transducer comprises a first electrode layer, a piezoelectric material layer, and a second electrode layer that are sequentially stacked, wherein
the first electrode layer comprises a plurality of spaced first electrode blocks;
the second electrode layer comprises a plurality of spaced second electrode blocks; and orthographic projection of each first electrode block on the second electrode layer overlaps at least one second electrode block, a thickness of each first electrode block is greater than a thickness threshold, and the thickness threshold is positively correlated with a wavelength of an ultrasonic wave emitted by the piezoelectric material layer.

2. The ultrasonic transducer according to claim 1, wherein the orthographic projection of each first electrode block on the second electrode layer overlaps one second electrode block.

3. The ultrasonic transducer according to claim 1 or 2, wherein the first electrode layer further comprises a plurality of first connection structures, and each first connection structure is configured to connect at least two first electrode blocks arranged in a first direction.

4. The ultrasonic transducer according to claim 3, wherein the first electrode layer further comprises a plurality of second connection structures, and each second connection structure is configured to connect at least two first electrode blocks arranged in a second direction, wherein
the second direction intersects the first direction.

5. The ultrasonic transducer according to claim 3 or 4, wherein each first connection structure is located between two adjacent first electrode blocks; or
each first connection structure is located on a side that is of at least two first electrode blocks and that is close to or away from the piezoelectric material layer.

6. The ultrasonic transducer according to claim 1, wherein each first electrode block is a bar-shaped electrode, and orthographic projection of the bar-shaped electrode on the second electrode layer overlaps at least two second electrode blocks.

7. The ultrasonic transducer according to any one of claims 1 to 6, wherein the thickness threshold is 1/8 of the wavelength of the ultrasonic wave emitted by the piezoelectric material layer.

8. The ultrasonic transducer according to claim 7, wherein the thickness of each first electrode block is n/4 times the wavelength of the ultrasonic wave, and n is a positive integer.

9. The ultrasonic transducer according to any one of claims 1 to 8, wherein the ultrasonic transducer further comprises a lens layer located on a side that is of the first electrode layer and that is away from the piezoelectric material layer; and
the lens layer comprises a plurality of spaced lenses, and orthographic projection of each lens on the second electrode layer overlaps at least one second electrode block.

10. The ultrasonic transducer according to claim 9, wherein the orthographic projection of each lens on the second electrode layer overlaps one second electrode block, and orthographic projection of each lens on the first electrode layer overlaps one first electrode block.

11. The ultrasonic transducer according to claim 9 or 10, wherein
a refractive index of the lens is less than a refractive index of an adjacent layer of the lens, and all the plurality of lenses are convex lenses; or
a refractive index of the lens is greater than a refractive index of an adjacent layer of the lens, and all the plurality of lenses are concave lenses.

12. The ultrasonic transducer according to any one of claims 1 to 11, wherein the piezoelectric material layer comprises a plurality of spaced piezoelectric blocks; and
orthographic projection of each piezoelectric block on the second electrode layer overlaps at least one second electrode block.

13. The ultrasonic transducer according to claim 12, wherein the orthographic projection of each piezoelectric block on the second electrode layer overlaps one second electrode block, and orthographic projection of each piezoelectric block on the first electrode layer overlaps one first electrode block.

14. The ultrasonic transducer according to any one of claims 1 to 13, wherein the ultrasonic transducer further comprises a waveguide layer, and the waveguide layer is located on a side that is of the first electrode layer or the second electrode layer and that is away from the piezoelectric material layer; and
the waveguide layer comprises a plurality of spaced waveguide blocks, and orthographic projection of each waveguide block on the first electrode layer overlaps at least one first electrode block.

15. The ultrasonic transducer according to claim 14, wherein if the ultrasonic transducer further comprises the lens layer, the waveguide layer is located between the first electrode layer and the lens layer, and a material of the waveguide layer is the same as a material of the lens layer.

16. The ultrasonic transducer according to any one of claims 1 to 15, wherein a gap between the plurality of first electrode blocks and a gap between the plurality of second electrode blocks are both vacuum or air; or
the ultrasonic transducer further comprises a filling material filled between the plurality of first electrode blocks and filled between the plurality of second electrode blocks.

17. The ultrasonic transducer according to any one of claims 1 to 16, wherein the plurality of second electrode blocks comprise a plurality of electrode groups arranged in the first direction, and each electrode group comprises at least two second electrode blocks arranged in the second direction, wherein every two adjacent electrode groups are arranged in a staggered manner.

18. An ultrasonic transducer, wherein the ultrasonic transducer comprises a first electrode layer, a piezoelectric material layer, a second electrode layer, a waveguide layer, and a lens layer, wherein
the first electrode layer is of an entire-layer structure, and the second electrode layer comprises a plurality of spaced second electrode blocks;
the waveguide layer comprises a plurality of spaced waveguide blocks, and orthographic projection of each waveguide block on the second electrode layer overlaps at least one second electrode block; and
the lens layer comprises a plurality of spaced lenses, and orthographic projection of each lens on the second electrode layer overlaps at least one second electrode block.

19. The ultrasonic transducer according to claim 18, wherein the orthographic projection of each waveguide block on the second electrode layer overlaps one second electrode block, and overlaps orthographic projection of one lens on the second electrode layer.

20. The ultrasonic transducer according to claim 18 or 19, wherein the waveguide layer is located between the first electrode layer and the lens layer, and a material of the waveguide layer is the same as a material of the lens layer.

21. A fingerprint recognition module, wherein the fingerprint recognition module comprises a fingerprint recognition circuit and the ultrasonic transducer according to any one of claims 1 to 20, wherein
the fingerprint recognition circuit is configured to: provide a drive signal for the ultrasonic transducer, to drive the ultrasonic transducer to emit an ultrasonic wave; and receive an electrical signal generated by the ultrasonic transducer based on a received reflected ultrasonic wave, and perform fingerprint recognition based on the electrical signal.

22. An electronic device, wherein the electronic device comprises a display and the fingerprint recognition module located on a side of the display according to claim 21.
